# EUROPÄISCHE PATENTANMELDUNG

(11) **EP 2 466 405 A1**
(43) Veröffentlichungstag der Anmeldung: **20.06.2012**
(21) Anmeldenummer: 10195060.8
(22) Anmeldetag: 15.12.2010
(51) Int. Cl.: G05B 19/418, H04L 12/40

(54) **Steuerungssystem für eine industrielle Einrichtung mit wahlfreier Umschaltung auf verschiedene Zentraleinheiten**

(71) Anmelder: Siemens Aktiengesellschaft, 80333 München (DE)
(72) Erfinder: Schmidt, Martin, 58135, Hagen (DE)

(57) **Zusammenfassung**

Ein Steuerungssystem für eine industrielle Einrichtung weist eine erste und eine zweite Zentraleinheit, eine Anzahl von an einen Feldbus angeschlossenen dezentralen Peripherieeinheiten und eine Umschalteinrichtung auf, die als Sternpunkt zwischen der ersten Zentraleinheit, der zweiten Zentraleinheit und dem Feldbus angeordnet ist. Mittels der Umschalteinrichtung ist alternativ eine der beiden Zentraleinheiten signaltechnisch mit dem Feldbus verbindbar und die jeweils andere Zentraleinheit signaltechnisch vom Feldbus abgekoppelt, so dass die Umschalteinrichtung nur von der mit dem Feldbus verbundenen Zentraleinheit ausgesendete Signale für die dezentralen Peripherieeinheiten weiterleitet und umgekehrt von den dezentralen Peripherieeinheiten ausgesendete Signale für die Zentraleinheiten nur an die verbundene Zentraleinheit weiterleitet. Aus Sicht der dezentralen Peripherieeinheiten ist ununterscheidbar, mit welcher Zentraleinheit sie kommunizieren. Der Umschalteinrichtung ist unabhangig von den zwischen den Zentraleinheiten und den dezentralen Peripherieeinheiten übermittelten Signalen vorgebbar, welche der Zentraleinheiten sie signaltechnisch mit dem Feldbus verbindet.

## Beschreibung

Steuerungssystem für eine industrielle Einrichtung mit wahlfreier Umschaltung auf verschiedene Zentraleinheiten

Die vorliegende Erfindung betrifft ein Steuerungssystem für eine industrielle Einrichtung,
- wobei das Steuerungssystem eine erste und eine zweite Zentraleinheit, eine Anzahl von an einen Feldbus angeschlossenen dezentralen Peripherieeinheiten und eine Umschalteinrichtung aufweist,
- wobei die Umschalteinrichtung mit beiden Zentraleinheiten und mit dem Feldbus verbunden ist, so dass die Umschalteinrichtung als Sternpunkt zwischen der ersten Zentraleinheit, der zweiten Zentraleinheit und dem Feldbus angeordnet ist,
- wobei mittels der Umschalteinrichtung alternativ eine der beiden Zentraleinheiten signaltechnisch mit dem Feldbus verbindbar ist und die jeweils andere Zentraleinheit signaltechnisch vom Feldbus abgekoppelt ist, so dass die Umschalteinrichtung nur von der signaltechnisch mit dem Feldbus verbundenen Zentraleinheit ausgesendete, für die dezentralen Peripherieeinheiten bestimmte Signale an die dezentralen Peripherieeinheiten weiterleitet und umgekehrt von den dezentralen Peripherieeinheiten ausgesendete, für die Zentraleinheiten bestimmte Signale nur an die signaltechnisch mit dem Feldbus verbundene Zentraleinheit weiterleitet,
- wobei aus Sicht der dezentralen Peripherieeinheiten ununterscheidbar ist, ob sie mit der ersten oder der zweiten Zentraleinheit kommunizieren.

Ein derartiges Steuerungssystem ist beispielsweise aufgrund der PROFIBUS-Umschaltbaugruppe PRS der Fa. Comsoft GmbH, Karlsruhe, Deutschland, bekannt. Die bekannte Baugruppe überwacht den über den PROFIBUS abgewickelten Datenverkehr und schaltet bei Ausfall einer der Zentraleinheiten automatisch und nahtlos auf die andere Zentraleinheit um.

Bei vielen industriellen Einrichtungen - insbesondere Großanlagen wie beispielsweise Walzwerken oder Chemieanlagen - soll oder muss ein möglichst kontinuierlicher Betrieb gewährleistet sein. Dennoch sollen beispielsweise Modernisierungen ("revamping"), Fehlerbehebungen usw. möglich sein. Im Rahmen der Modernisierung von Automatisierungseinrichtungen wird hierzu u.a. vielfach eine Zentraleinheit des Steuerungssystems ausgetauscht. Die dezentralen Peripherieeinheiten und der Feldbus werden hingegen beibehalten.

In manchen Fällen geschieht es, dass das Steuerungssystem nach dem Austausch der Zentraleinheit nicht ordnungsgemäß funktioniert. Um in derartigen Fällen einen vollständigen Stillstand der industriellen Einrichtung und den damit verbundenen Betriebsausfall zu vermeiden, muss eine schnelle Umschaltung auf die bisherige - zwar nur suboptimal arbeitende, aber zumindest lauffähige - vorherige Zentraleinheit möglich sein. Für eine derartige Umschaltung ist die für die PROFIBUS-Baugruppe der Fa. Comsoft beschriebene Vorgehensweise ungeeignet.

Im Stand der Technik wurde die Umschaltung bisher durch den Einsatz von potentialtrennenden Koppelgliedern wie beispielsweise Optokopplern und Relais gelöst. Hierbei wurden die vorhandenen Signale der Peripherieeinheiten parallel abgegriffen, sofern es sich um Eingangssignale für die Zentraleinheit handelte. Ausgangssignale für die dezentralen Peripherieeinheiten wurden mittels Relais, Optokoppler und dergleichen umgeschaltet. Bei dieser Vorgehensweise entstand ein großer Anteil an Hardwareplanung, Hardwareerstellung und - da auch hier Fehler auftreten konnten - Fehlersuche nach der Realisierung.

Die Aufgabe der vorliegenden Erfindung besteht darin, auf einfache Weise eine gezielte Umschaltung zwischen zwei Zentraleinheiten zu ermöglichen.

Die Aufgabe wird durch ein Steuerungssystem mit den Merkmalen des Anspruchs 1 gelöst. Vorteilhafte Ausgestaltungen des erfindungsgemäßen Steuerungssystems sind Gegenstand der abhängigen Ansprüche 2 bis 8.

Erfindungsgemäß ist vorgesehen, ein Steuerungssystem der eingangs genannten Art dadurch auszugestalten, dass der Umschalteinrichtung unabhängig von den zwischen den Zentraleinheiten und den dezentralen Peripherieeinheiten übermittelten Signalen vorgebbar ist, welche der Zentraleinheiten sie signaltechnisch mit dem Feldbus verbindet.

Die Umschaltung zwischen den Zentraleinheiten kann beispielsweise dadurch realisiert sein,
- dass die Umschalteinrichtung einen ersten Feldbusrepeater und einen zweiten Feldbusrepeater aufweist,
- dass der erste Feldbusrepeater zwischen der ersten Zentraleinheit und dem Feldbus angeordnet ist,
- dass der zweite Feldbusrepeater zwischen der zweiten Zentraleinheit und dem Feldbus angeordnet ist und
- dass alternativ der erste oder der zweite Feldbusrepeater aktivierbar ist.

In dem Fall, dass die über den Feldbus übertragenen Signale elektrische Signale sind, kann die Anbindung des zweiten Feldbusrepeaters an den Feldbus beispielsweise durch eine Verbindungsleitung bewirkt werden, über welche die beiden Feldbusrepeater feldbusseitig miteinander verbunden sind.

Vorzugsweise weist die Umschalteinrichtung einen Wechselschalter auf, über den alternativ der erste oder der zweite Feldbusrepeater an eine Energieversorgung anschaltbar sind. Durch diese Ausgestaltung ist die Umschaltung von der einen zur anderen Zentraleinheit besonders einfach zu erreichen.

Vorzugsweise ist mindestens eine der Zentraleinheiten über eine Potentialentkopplungseinrichtung an die Umschalteinrichtung angeschlossen. Durch diese Ausgestaltung sind Rückwirkungen der industriellen Einrichtung auf die über den Feldbus zur jeweiligen Zentraleinheit übertragenen Signale ausgeschlossen.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch ein Steuerungssystem für eine industrielle Einrichtung,
- FIG 2: schematisch eine mögliche Realisierung einer Umschalteinrichtung,
- FIG 3: schematisch das Prinzip einer Potentialentkopplung und
- FIG 4: schematisch ein Beispiel einer industriellen Einrichtung.

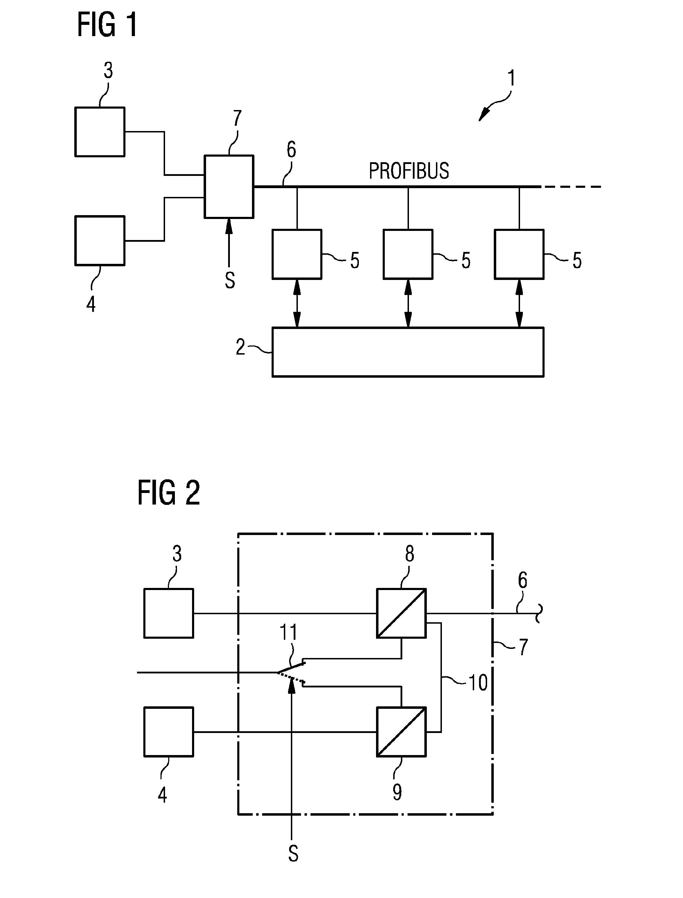

Gemäß FIG 1 weist ein Steuerungssystem 1 für eine industrielle Einrichtung 2 eine erste Zentraleinheit 3 und eine zweite Zentraleinheit 4 auf. Das Steuerungssystem 1 weist weiterhin eine Anzahl von dezentralen Peripherieeinheiten 5 auf, die an einen Feldbus 6 angeschlossen sind. Der Feldbus 6 kann entsprechend der Angabe in FIG 1 beispielsweise als PROFIBUS ausgebildet sein. Alternativ kann der Feldbus 6 als beliebiger anderer Feldbus ausgebildet sein, vorzugsweise als serieller Feldbus.

Das Steuerungssystem 1 weist weiterhin eine Umschalteinrichtung 7 auf. Die Umschalteinrichtung 7 ist mit beiden Zentraleinheiten 3, 4 und mit dem Feldbus 6 verbunden. Die Umschalteinrichtung 7 ist somit als Sternpunkt zwischen der ersten Zentraleinheit 3, der zweiten Zentraleinheit 4 und dem Feldbus 6 angeordnet. Mittels der Umschalteinrichtung 7 ist alternativ eine der beiden Zentraleinheiten 3, 4 signaltechnisch mit dem Feldbus 6 verbindbar. Die jeweils andere Zentraleinheit 4, 3 ist signaltechnisch vom Feldbus 6 abgekoppelt. Welche der beiden Zentraleinheiten 3, 4 mit dem Feldbus 6 signaltechnisch verbunden ist und welche der beiden Zentraleinheiten 3, 4 signaltechnisch vom Feldbus 6 abgekoppelt ist, wird durch den Schaltzustand der Umschalteinrichtung 7 bestimmt. Ein entsprechender Schaltbefehl S kann der Umschalteinrichtung 7 von außen - beispielsweise von einem nicht dargestellten Bediener - vorgegeben werden.

Die signaltechnische Verbindung der jeweiligen Zentraleinheit 3, 4 mit dem Feldbus 6 hat zur Folge, dass die Umschalteinrichtung 7 nur von der signaltechnisch mit dem Feldbus 6 verbundenen Zentraleinheit 3, 4 ausgesendete, für die dezentralen Peripherieeinheiten 5 bestimmte Signale an die dezentralen Peripherieeinheiten 5 weiterleitet. Von der anderen Zentraleinheit 4, 3 ausgesendete Signale werden nicht weitergeleitet. Umgekehrt leitet die Umschalteinrichtung 7 von den dezentralen Peripherieeinheiten 5 ausgesendete, für die Zentraleinheiten 3, 4 bestimmte Signale nur an die signaltechnisch mit dem Feldbus 6 verbundene Zentraleinheit 3, 4 weiter. An die andere, signaltechnisch vom Feldbus 6 abgekoppelte Zentraleinheit 4, 3 werden diese Signale nicht weitergeleitet.

Die Zentraleinheiten 3, 4 sind aus Sicht der dezentralen Peripherieeinheiten 5 ununterscheidbar. Die Peripherieeinheiten 5 können also nicht unterscheiden, ob sie mit der ersten oder der zweiten Zentraleinheit 3, 4 kommunizieren. Insbesondere können in Bezug auf die Kommunikation über den Feldbus 6 beide Zentraleinheiten 3, 4 dieselbe Busadresse aufweisen. Auch können beide Zentraleinheiten 3, 4 die von den dezentralen Peripherieeinheiten übermittelten Signale (meist so genannte Telegramme) korrekt interpretieren und verarbeiten. Weiterhin weisen die von der einen Zentraleinheit 3, 4 übermittelten Signale (meist ebenfalls Telegramme) dasselbe Format auf wie die von der anderen Zentraleinheit 4, 3 übermittelten Signale.

Wie bereits erwähnt, wird der gewünschte Schaltzustand der Umschalteinrichtung 7 über den Schaltbefehl S von außen vorgegeben. Der Schaltbefehl S ist als solcher unabhängig von den von den Zentraleinheiten 3, 4 ausgesendeten Signalen. Der Schaltbefehl S ist der Umschalteinrichtung 7 somit insbesondere unabhängig von den zwischen den Zentraleinheiten 3, 4 und den dezentralen Peripherieeinheiten 5 übermittelten Signalen vorgebbar. Zur Vorgabe des Schaltbefehls S kann die Überwachungseinrichtung 7 beispielsweise einen mechanisch betätigbaren Schalter aufweisen, mittels dessen eingestellt wird, welche der Zentraleinheiten 3, 4 die Umschalteinrichtung 7 signaltechnisch mit dem Feldbus 6 verbindet. Alternativ ist es möglich, der Umschalteinrichtung 7 den Schaltbefehl S als entsprechendes elektrisches oder optisches Signal vorzugeben, so dass die Umschalteinrichtung 7 selbst entsprechend schaltet.

Zur Realisierung der Umschalteinrichtung 7 kann gemäß der Darstellung von FIG 2 beispielsweise die Umschalteinrichtung 7 einen ersten und einen zweiten Feldbusrepeater 8, 9 aufweisen. In diesem Fall ist der erste Feldbusrepeater 8 zwischen der ersten Zentraleinheit 3 und dem Feldbus 6 angeordnet. Der zweite Feldbusrepeater 9 ist zwischen der zweiten Zentraleinheit 4 und dem Feldbus 6 angeordnet. Alternativ ist der erste oder der zweite Feldbusrepeater 8, 9 aktivierbar. Der jeweils andere Feldbusrepeater 9, 8 ist deaktiviert. Mittels des Schaltbefehls S wird in diesem Fall eingestellt, welcher der beiden Feldbusrepeater 8, 9 aktiviert ist. Die Feldbusrepeater 8, 9 weisen intern jeweils einen bidirektional arbeitenden Wandler auf. Der Wandler des aktivierten Feldbusrepeaters 8, 9 empfängt über den Feldbus 6 die von den dezentralen Peripherieeinheiten 5 ausgesendeten Signale, wandelt sie und gibt sie als gewandelte Signale an die jeweilige Zentraleinheit 3, 4 aus. Ebenso empfängt der Wandler des aktivierten Feldbusrepeaters 8, 9 von der jeweiligen Zentraleinheit 3, 4 die von der jeweiligen Zentraleinheit 3, 4 ausgesendeten Signale, wandelt sie und gibt sie als gewandelte Signale über den Feldbus 6 an die dezentralen Peripherieeinheiten 5 aus. Das Aktivieren und Deaktivieren der Feldbusrepeater 8, 9 kann daher insbesondere dadurch erreicht werden, dass der jeweilige Wandler des entsprechenden Feldbusrepeaters 8, 9 aktiviert oder deaktiviert wird. Das Aktivieren und Deaktivieren kann beispielsweise durch Anschalten und Abschalten der Stromversorgung des Wandlers erfolgen.

In vielen Fällen sind die über den Feldbus 6 übertragenen Signale elektrische Signale. In diesem Fall kann insbesondere die Anbindung des zweiten Feldbusrepeaters 9 an den Feldbus 6 entsprechend der Darstellung von FIG 2 durch eine Verbindungsleitung 10 bewirkt werden, über welche die beiden Feldbusrepeater 8, 9 feldbusseitig (ergänze: direkt) miteinander verbunden sind. Beispielsweise kann die Verbindungsleitung 10 feldbusseitig an dieselben Klemmen des ersten Feldbusrepeaters 8 angeschlossen sein, an die auch der Feldbus 6 angeschlossen ist.

Wie bereits erwähnt, kann das Aktivieren und Deaktivieren der Feldbusrepeater 8, 9 durch Anschalten einer Energieversorgung an die Feldbusrepeater 8, 9 und Abschalten der Energieversorgung von den Feldbusrepeatern 8, 9 erreicht werden. Vorzugsweise weist die Umschalteinrichtung 7 daher entsprechend der Darstellung von FIG 2 einen Wechselschalter 11 auf, über den alternativ der erste oder der zweite Feldbusrepeater 8, 9 an die Energieversorgung anschaltbar sind.

Falls für einen ordnungsgemäßen Betrieb des Feldbusses 6 erforderlich ist, dass in dem Fall, dass der zweite Feldbusrepeater 9 deaktiviert ist, die Verbindungsleitung 10 auf Seiten des zweiten Feldbusrepeaters 9 über Terminierungswiderstände auch mit der Energieversorgung verbunden ist, kann eine derartige Verbindung unabhängig von der Energieversorgung im betriebstechnischen Sinne (Aktivieren/Deaktivieren) realisiert sein. Die Terminierungswiderstände sind in diesem Falle in der Regel in beiden Schaltzuständen - also sowohl bei aktiviertem erstem Feldbusrepeater 8 als auch bei aktiviertem zweitem Feldbusrepeater 9 - aktiv.

Es ist möglich, dass die Zentraleinheiten 3, 4 direkt mit der Umschalteinrichtung 7 verbunden sind. Alternativ ist es möglich, dass eine der Zentraleinheiten 3, 4 über eine Potentialentkopplungseinrichtung 12 - beispielsweise einen Optokoppler - an die Umschalteinrichtung 7 angeschlossen ist. Auch ist möglich, dass beide Zentraleinheiten 3, 4 über eine jeweilige Potentialentkopplungseinrichtung 12 an die Umschalteinrichtung 7 angeschlossen sind.

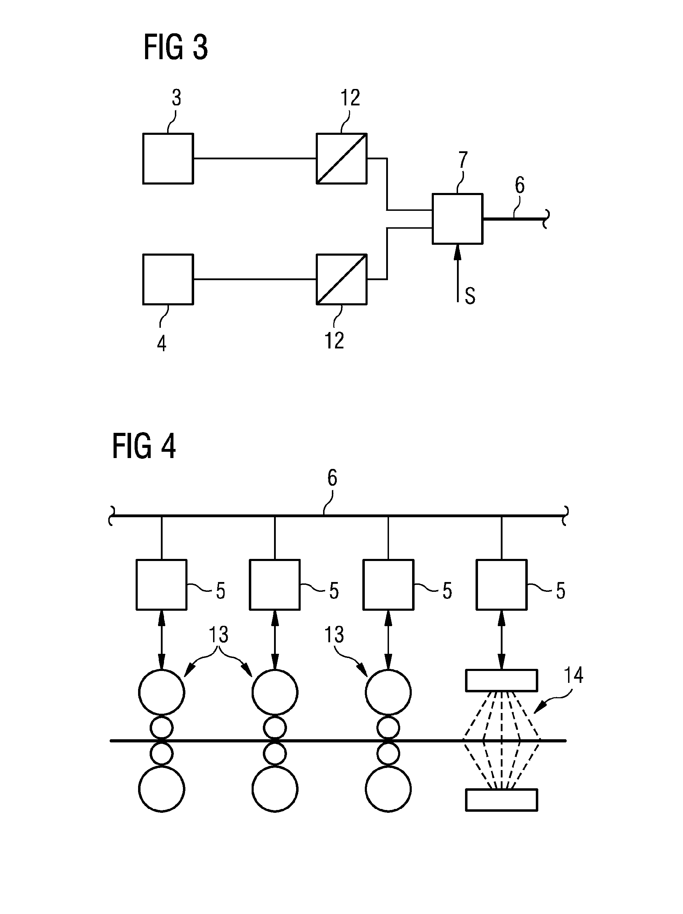

Die industrielle Einrichtung 2 kann nach Bedarf ausgebildet sein. Insbesondere kann die industrielle Einrichtung 2 gemäß FIG 4 beispielsweise als Walzwerk ausgebildet sein, das mindestens ein Walzgerüst 13 aufweist. Gemäß FIG 4 ist weiterhin den Walzgerüsten 13 eine Kühlstrecke 14 nachgeordnet. Das Walzwerk von FIG 4 ist daher als Fertigstraße ausgebildet.

Mittels des erfindungsgemäßen Steuerungssystems 1 ist auf einfache Weise ein gezieltes Umschalten zwischen den Zentraleinheiten 3, 4 möglich. Es ist also beispielsweise möglich, eine neue, modernisierte Zentraleinheit 4 an ein bestehendes Steuerungssystem 1 (das die zweite Zentraleinheit 4 noch nicht enthält) anzukoppeln, auf die zweite Zentraleinheit 4 umzuschalten und in dem Fall, dass Fehler auftreten, sofort und direkt wieder auf die erste Zentraleinheit 3 zurückzuschalten.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuerungssystem für eine industrielle Einrichtung (2),
- wobei das Steuerungssystem eine erste und eine zweite Zentraleinheit (3, 4), eine Anzahl von an einen Feldbus (6) angeschlossenen dezentralen Peripherieeinheiten (5) und eine Umschalteinrichtung (7) aufweist,
- wobei die Umschalteinrichtung (7) mit beiden Zentraleinheiten (3, 4) und mit dem Feldbus (6) verbunden ist, so dass die Umschalteinrichtung (7) als Sternpunkt zwischen der ersten Zentraleinheit (3), der zweiten Zentraleinheit (4) und dem Feldbus (6) angeordnet ist,
- wobei mittels der Umschalteinrichtung (7) alternativ eine der beiden Zentraleinheiten (3, 4) signaltechnisch mit dem Feldbus (6) verbindbar ist und die jeweils andere Zentraleinheit (4, 3) signaltechnisch vom Feldbus (6) abgekoppelt ist, so dass die Umschalteinrichtung (7) nur von der signaltechnisch mit dem Feldbus (6) verbundenen Zentraleinheit (3, 4) ausgesendete, für die dezentralen Peripherieeinheiten (5) bestimmte Signale an die dezentralen Peripherieeinheiten (5) weiterleitet und umgekehrt von den dezentralen Peripherieeinheiten (5) ausgesendete, für die Zentraleinheiten (3, 4) bestimmte Signale nur an die signaltechnisch mit dem Feldbus (6) verbundene Zentraleinheit (3, 4) weiterleitet,
- wobei aus Sicht der dezentralen Peripherieeinheiten (5) ununterscheidbar ist, ob sie mit der ersten oder der zweiten Zentraleinheit (3, 4) kommunizieren,
**dadurch gekennzeichnet, dass** der Umschalteinrichtung (7) unabhängig von den zwischen den Zentraleinheiten (3, 4) und den dezentralen Peripherieeinheiten (5) übermittelten Signalen vorgebbar ist, welche der Zentraleinheiten (3, 4) sie signaltechnisch mit dem Feldbus (6) verbindet.

2. Steuerungssystem nach Anspruch 1,
**dadurch gekennzeichnet,**
- **dass** die Umschalteinrichtung (7) einen ersten Feldbusrepeater (8) und einen zweiten Feldbusrepeater (9) aufweist,
- **dass** der erste Feldbusrepeater (8) zwischen der ersten Zentraleinheit (3) und dem Feldbus (6) angeordnet ist,
- **dass** der zweite Feldbusrepeater (9) zwischen der zweiten Zentraleinheit (4) und dem Feldbus (6) angeordnet ist und
- **dass** alternativ der erste oder der zweite Feldbusrepeater (8, 9) aktivierbar ist.

3. Steuerungssystem nach Anspruch 2,
**dadurch gekennzeichnet, dass** die über den Feldbus (6) übertragenen Signale elektrische Signale sind und dass die Anbindung des zweiten Feldbusrepeaters (9) an den Feldbus (6) durch eine Verbindungsleitung (10) bewirkt wird, über welche die beiden Feldbusrepeater (8, 9) feldbusseitig miteinander verbunden sind.

4. Steuerungssystem nach Anspruch 2 oder 3,
**dadurch gekennzeichnet, dass** die Umschalteinrichtung (7) einen Wechselschalter (11) aufweist, über den alternativ der erste oder der zweite Feldbusrepeater (8, 9) an eine Energieversorgung anschaltbar sind.

5. Steuerungssystem nach einem der obigen Ansprüche,
**dadurch gekennzeichnet, dass** mindestens eine der Zentraleinheiten (3, 4) über eine Potentialentkopplungseinrichtung (12) an die Umschalteinrichtung (7) angeschlossen ist.

6. Steuerungssystem nach einem der obigen Ansprüche,
**dadurch gekennzeichnet, dass** der Feldbus (6) als PROFIBUS ausgebildet ist.

7. Steuerungssystem nach einem der obigen Ansprüche,
**dadurch gekennzeichnet, dass** die industrielle Einrichtung (2) als Walzwerk ausgebildet ist.

8. Steuerungssystem nach Anspruch 7,
**dadurch gekennzeichnet, dass** das Walzwerk als Fertigstrasse ausgebildet ist.
